# FASCICULE DE BREVET EUROPEEN

(11) **EP 3 067 220 B1**
(45) Date de publication et mention de la délivrance du brevet: **18.04.2018**
(21) Numéro de dépôt: 15158933.0
(22) Date de dépôt: 13.03.2015
(51) Int. Cl.: B44C 1/22, B23K 26/00, B23K 103/04, B23K 26/359, B23K 103/00, B23K 26/0622, B23K 103/12, B23K 103/08, B23K 103/14

(54) **PROCÉDÉ DE DÉCORATION D'UN ÉLÉMENT D'HORLOGERIE ET ÉLÉMENT HORLOGER OBTENU PAR UN TEL PROCÉDÉ**
DEKORATIONSVERFAHREN EINES UHRELEMENTS, UND ANHAND EINES SOLCHEN VERFAHRENS HERGESTELLTES UHRELEMENT
METHOD FOR DECORATING A TIMEPIECE AND TIMEPIECE OBTAINED BY SUCH A METHOD

(43) Date de publication de la demande: 14.09.2016
(73) Titulaire: ROLEX SA, 1211 Genève 26 (CH)
(72) Inventeur: NOIROT, Antony, 74800 Saint-Pierre en Faucigny (FR); OLIVEIRA, Alexandre, 74800 Amancy (FR)
(74) Mandataire: Moinas & Savoye SARL

(56) Documents cités:
- WO-A1-2013/135703
- WO-A2-2008/097374
- FR-A1- 2 288 795
- VOROBYEV A ET AL: "Colorizing metals with femtosecond laser pulses", APPLIED PHYSICS LETTERS, AMERICAN INSTITUTE OF PHYSICS, US, vol. 92, no. 4, 31 janvier 2008 (2008-01-31), pages 41914-41914, XP012107943, ISSN: 0003-6951, DOI: 10.1063/1.2834902

## Description

L'invention concerne un procédé de décoration d'un élément d'horlogerie, notamment un élément de montre. Elle concerne aussi un élément horloger en tant que tel obtenu par la mise en oeuvre d'un tel procédé. Enfin, l'invention concerne aussi une pièce d'horlogerie, notamment une montre, par exemple une montre bracelet, comprenant un tel élément horloger

Lorsque l'on souhaite réaliser un décor sur un élément d'horlogerie, comme un cadran, il est connu de travailler la surface afin de lui donner une structure, traditionnellement par des procédés comme le meulage, le brossage ou le diamantage par exemple. Une telle approche de l'état de la technique comprend une seule étape d'usinage de la surface à décorer, pour réaliser un effet de surface choisi. Cette étape peut être combinée à d'autres étapes de mise en couleur telles que le vernissage, la galvanoplastie ou le dépôt PVD.

Les solutions de décoration existantes sont insatisfaisantes. En effet, il convient de noter que les applications horlogères sont très exigeantes pour un tel procédé de décoration : l'aspect esthétique obtenu est très important et le meulage et la coloration doivent être exempts de défauts ou de bavures. Les exigences au niveau de la robustesse sont également élevées, car les éléments ainsi décorés sont susceptibles d'être des composants d'habillement soumis aux chocs et à l'environnement parfois agressif (eau de mer, sueur, etc.). Enfin, les possibilités de décoration offertes par ces solutions existantes se limitent à un choix restreint parmi quelques solutions anciennes et bien connues, ce qui ne permet pas d'offrir des solutions de décoration originales.

En parallèle, il existe des solutions complémentaires à ces procédés de décoration, dont l'objectif n'est pas la décoration. Le document WO2013135703 décrit par exemple l'utilisation d'un laser femtoseconde pour colorer un substrat métallique et réaliser ainsi un marquage de ce substrat.

Le but de l'invention est de fournir un procédé de décoration d'un élément d'horlogerie, notamment un cadran, qui permet d'atteindre de manière simple un aspect esthétique nouveau, précis et attractif, avec une grande versatilité et durable dans le temps.

A cet effet, le procédé de décoration comprend les étapes suivantes :
- Gravage profond d'une surface à décorer de l'élément horloger par un laser femtoseconde ; et
- Structuration de surface de ladite surface à décorer de l'élément horloger,
ces deux décorations étant au moins partiellement superposées l'une à l'autre.

Un procédé de décoration, un élément horloger et une pièce d'horlogerie selon l'invention sont définis par les revendications.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 représente schématiquement les étapes du procédé de décoration selon un mode de réalisation de l'invention.
La figure 2 représente schématiquement en vue de dessus un élément horloger obtenu après une première étape de gravage profond selon le mode de réalisation de l'invention.
La figure 3 représente un profil en coupe de l'élément horloger selon un plan transverse à sa surface, obtenu après la première étape de gravage profond selon le mode de réalisation de l'invention.
La figure 4 représente schématiquement en vue de dessus un élément horloger obtenu après une variante de l'étape de gravage profond selon le mode de réalisation de l'invention.
La figure 5 représente un profil en coupe de l'élément horloger selon un plan transverse à sa surface, obtenu après la variante de l'étape de gravage profond selon le mode de réalisation de l'invention.
La figure 6 représente schématiquement en vue de dessus une partie d'un élément horloger obtenu après une première étape de gravage profond selon le mode de réalisation de l'invention.
La figure 7 représente schématiquement en vue de dessus cette même partie d'un élément horloger obtenue après une première étape de gravage profond suivie d'une seconde étape de structuration de surface selon le mode de réalisation de l'invention.
La figure 8 représente schématiquement en vue de dessus cette même partie d'un élément horloger obtenue après uniquement la seconde étape de structuration de surface selon le mode de réalisation de l'invention.

Selon le mode d'exécution du procédé de décoration de l'invention, on utilise les possibilités offertes par l'usinage laser femtoseconde pour décorer un élément d'horlogerie, en matériau massif métallique ou non métallique, en combinaison avec une seconde technique de décoration. Plus précisément, le procédé de décoration comprend un gravage profond réalisé par l'utilisation d'un laser femtoseconde, combiné avec un meulage ou usinage beaucoup moins profond que nous dénommerons simplement « structuration de surface ». Les exigences et la complexité de ces opérations font qu'il était considéré comme non réaliste de combiner deux opérations d'usinage de nature différente pour former une même décoration sur un élément horloger. En effet, le gravage traditionnel induit des bavures qu'il est nécessaire de retirer par une reprise ou un polissage, qui peuvent engendrer à leur tour des défauts esthétiques dans la régularité de la gravure. Ce préjugé est ici surmonté. Il est démontré que ces étapes combinées permettent d'atteindre un résultat d'effet décoratif inattendu. Cette approche présente de plus l'avantage d'augmenter fortement les possibilités de décoration d'un élément horloger.

Le mode de réalisation de l'invention repose ainsi sur la réalisation de décorations par l'intermédiaire de reliefs obtenus par des parties creuses réalisées dans la surface d'un élément horloger, ces reliefs étant de deux natures différentes, obtenus respectivement par l'application de deux étapes distinctes et complémentaires du procédé de décoration.

L'invention va maintenant être illustrée de manière non limitative dans le cadre de la décoration d'un cadran de montre. Elle pourrait naturellement être utilisée pour décorer un autre élément horloger, d'une montre-bracelet ou d'un mouvement horloger, comme par exemple et de façon non limitative, une lunette, des ébauches et des fournitures de mouvements, notamment des couvercles ou, des tambours de barillet ou des rochets.

Le procédé de décoration selon le mode de réalisation comprend en particulier, après des étapes de préparation de la surface E1, de satinage, blocage ou giclage E2 et de dépôt d'une couche de protection E3 traditionnellement appliquées dans le domaine des cadrans et décrites ci-après, une première étape de gravage profond E10 réalisée à l'aide d'un laser femtoseconde. Le laser est utilisé de manière telle qu'il permet de générer une gravure profonde dans la surface à décorer du cadran, son réglage dépendant de l'aspect esthétique final recherché.

Un laser femtoseconde est un type de laser particulier qui produit des impulsions ultra-courtes dont la durée est de l'ordre de quelques femtosecondes à quelques centaines de femtosecondes (1 fs = 1 femtoseconde = 10⁻¹⁵ seconde). Ainsi, pour décorer un cadran en laiton, le laser femtoseconde peut par exemple générer des impulsions de longueur d'onde 1030 nm, d'énergie de 20 µJ, avec un taux d'impulsion de 500 kHz et une durée d'impulsion de 270 fs.

Naturellement, ces valeurs numériques sont données à titre d'exemple et peuvent prendre d'autres valeurs, variables dans une certaine plage ; la longueur d'onde du laser peut par exemple être comprise entre 300 nm et 1100 nm, par exemple typiquement de 343 nm pour un saphir et de 515 nm sur du silicium. La durée des impulsions peut varier entre 200 fs et 500 fs.

Un système optique est utilisé pour la mise en forme du faisceau, composé de différents éléments afin de régler l'énergie délivrée, la polarisation et la taille du faisceau. Le faisceau est balayé sur la cible (surface de l'élément horloger) par un dispositif de déviation optique du faisceau commandé par électronique. Il permet de réaliser les motifs souhaités via un logiciel de commande. Par exemple, des lentilles F-Theta sont utilisées dans le mode de réalisation, de 100 mm et de 160 mm de focale, respectivement, pour permettre un usinage sur une surface respective (champ) de diamètre 72 mm et 121 mm. Avec une lentille F-Theta de 60 mm de focale, la surface (champ) est réduite à un diamètre de 45 mm. La tête de balayage est pilotée par un logiciel associé à une carte numérique de pilotage permettant de synchroniser le déplacement du faisceau avec le tir laser. Cet ensemble permet entre autre de modifier la vitesse de déplacement du faisceau laser sur la surface à graver, la stratégie de balayage laser et enfin le nombre de passages sur une même zone. Le système de micro-positionnement est piloté selon cinq axes, soit trois axes de translation et deux axes de rotation.

En remarque, contrairement à la solution décrite dans le document WO2013135703, le laser femtoseconde est utilisé ici pour former une gravure de décoration, sans coloration du fond de la gravure. La forme des gravures peut être quelconque, pour former tout dessin, ou bien des lettres ou des chiffres.

La profondeur de la gravure obtenue peut être ajustée avec le nombre de passes, donc le nombre de répétitions du motif de balayage : plus le nombre de passes est élevé, plus la creusure sera profonde. Dans tous les cas, l'enlèvement de matière résultant de cette étape de gravage profond E10 provoque la réalisation d'une creusure d'une profondeur moyenne supérieure ou égale à 4 µm, de préférence comprise entre 4 et 25 µm inclus, voire d'une profondeur moyenne supérieure ou égale à 8 µm. Nous entendons donc par gravure profonde une gravure de profondeur en moyenne supérieure ou égale à 4 µm.

L'invention ne porte pas sur le dessin réalisé par cette étape de gravage, qui permet de former toutes courbes en déplaçant le faisceau selon une trajectoire choisie, en particulier des lignes, parallèles ou sensiblement parallèles. A titre d'exemple, la surface à décorer peut être partagée en différentes zones, chaque zone comprenant des gravures profondes parallèles entre elles, ces gravures de deux zones différentes n'étant pas nécessairement parallèles, les gravures de deux zones voisines pouvant par exemple être perpendiculaires entre elles.

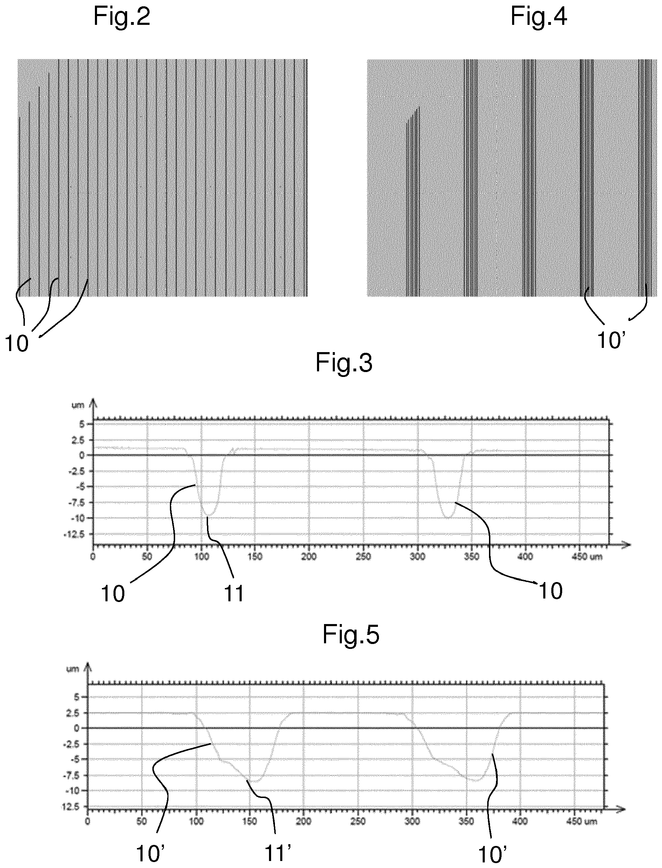

Les figures 2 à 5 représentent par exemple des réalisations obtenues par cette première étape de gravage profond avec des paramètres suivants :
- Diamètre du faisceau laser femtoseconde à la focale : 20 à 40 µm ;
- Ecart latéral entre deux gravures : 140 à 280 µm ;
- Profondeur de gravure : 5, 10 ou 20 µm.
Les taux de recouvrement latéraux et longitudinaux sont compris entre 50% et 99%, et sont pour ces exemples de réalisation de 68% et de 84% respectivement. Les densités de puissance doivent être supérieures au seuil d'ablation du matériau, et sont typiquement de l'ordre de 12,7 x 10⁶ MW/cm².

Les figures 2, 3 et 4, 5 représentent respectivement deux exemples de profils obtenus avec deux types de balayage différents. Les figures 2, 3 représentent en effet un profil régulier dit « filaire », dans lequel les gravures 10 obtenues sont étroites et régulières, notamment la forme du fond 11 des gravures, et sont de profondeur sensiblement égale à 10 µm.

Les figures 4, 5 représentent un profil moins régulier dit à « remplissage », obtenu avec plusieurs passages du faisceau laser pour former une même gravure, décalés latéralement, permettant de former des gravures 10' en forme de tranchées plus larges, pouvant présenter un fond 11' de gravure avec un profil moins régulier.

Le procédé de décoration peut comprendre une étape E4 de dépôt d'une couche de métal malléable (décrite ci-après). Il comprend ensuite une nouvelle étape de traitement de surface, dite étape de structuration de surface E20, au moins partiellement superposée aux gravures formées à l'étape de gravage.

Cette étape de structuration de surface comprend un deuxième usinage, qui peut être par exemple un soleillage, qui consiste à rayer superficiellement la surface du cadran avec une brosse et/ou une pâte abrasive. En variante, cette étape peut mettre en oeuvre un giclage, et/ou un sablage, et/ou une frappe fine. Dans le cas d'un soleillage, un fin réseau de raies disposées aléatoirement va être réalisé, par exemple dans une couche d'argent, comme cela sera mentionné plus loin. Les raies réalisées sont très fines et ont une profondeur qui est nettement plus faible que celle des tranchées réalisées au laser. La haute qualité des gravures réalisées au laser femtoseconde lors de la première étape permet de réaliser un deuxième usinage et d'obtenir une haute qualité esthétique requise, sans défaut et sans bavure.

On peut bien entendu imaginer utiliser une autre technique que celles de soleillage, de giclage, de sablage, de frappe fine, mentionnées ci-dessus, dans cette étape de structuration de surface, selon l'aspect final que l'on souhaite donner au cadran. A titre d'exemple, voici d'autres techniques possibles pouvant être mises en oeuvre dans ce traitement de surface :
- Le satinage, le brossage, qui donnent comme le giclage une texture très fine et peu profonde ;
- L'azurage, consistant en la réalisation de fins cercles concentriques qui animent une surface ;
- Le diamantage, un polissage très soigné.

Finalement, la structuration de surface réalise un décor peu profond en venant rayer de façon contrôlée mais potentiellement aléatoire la surface de la pièce. Les outils utilisés peuvent être par exemple des tampons recouverts d'abrasif ou des brosses. Cette étape de structuration de surface forme une rugosité surfacique comprise de préférence entre 0.05 et 0.1 µm, donc avec des stries de profondeur inférieure ou égale à 0,1 µm, voire en variante inférieure ou égale à 0.3 µm ou inférieure ou égale à 1 µm. Cette structuration forme donc des raies (ou stries) sur cette épaisseur mentionnée, de préférence suffisamment denses pour être visibles, et régulières et organisées, formant une trame particulière qui combine une orientation régulière avec un détail variable d'un composant à l'autre, procurant un aspect visuel attrayant.

La structuration de surface permet par exemple de former des dessins connus, parmi lesquels :
- Les Côtes de Genève, qui forment un motif de zones brossées en bandes. Il est possible de varier la largeur, la finesse, l'angle et l'écart, plus ou moins prononcé, entre les bandes de côtes. Selon un mouvement de va et vient, l'abrasif ou la brosse marque la surface de stries parallèles, droites ou circulaires, qui forment les côtes ;
- Le perlage, qui est un décor formé de cercles à traits concentriques très rapprochés, voire empiétant les uns sur les autres. Il orne couramment les ponts, les platines, les fonds de noyures et les cadrans ;
- Le soleillage, mentionné précédemment, qui est une décoration formée de lignes ayant un même point d'intersection, qui donne à la pièce l'aspect d'un soleil. Cet ornement à traits rayonnants est réalisé au moyen par exemple d'une meule qui tourne dans le sens inverse de la pièce et est orientée de manière à obtenir des lignes droites passant par le même point de centre ;
- Le colimaçonnage, qui est un décor en forme de spirale, généralement effectué sur les rochets des barillets, les masses oscillantes, les barillets ou encore les couvercles de barillets. Cette décoration est obtenue au moyen d'une meule que l'on fait tourner sur la surface de la pièce en l'orientant de manière à obtenir des traits en forme de spirale.

Comme cela a été vu précédemment, l'intérêt du procédé est qu'il permet de combiner deux types de décors, notamment le gravage profond et le soleillage, de façon simple, en atteignant une haute qualité esthétique. Une telle combinaison n'est pas évidente pour un cadran : les étapes de procédé sont nombreuses et influencent souvent le rendu final obtenu. Ainsi par exemple, une reprise ou un polissage, qui peuvent être utilisés et nécessaires en général pour éliminer les bavures d'un gravage, ne sont pas possibles ici car ils viendraient endommager l'état de surface entre les gravures et modifier l'aspect du soleillage obtenu ultérieurement. L'utilisation du laser femtoseconde pour graver une plaque de cadran simplifie ainsi grandement les étapes de fabrication, et garantit une très bonne qualité esthétique. Le laser permet aussi d'ajuster finement les paramètres de la gravure (épaisseur de trait, profondeur de trait, distance entre les traits) pour obtenir l'effet esthétique recherché. Il permet entre autres de réaliser des cadrans avec des décors lignés orientés de façon différente selon les zones du cadran, de façon beaucoup plus versatile qu'auparavant.

Les deux types de décor combinés sont au moins partiellement superposés. Selon un mode de réalisation, des stries obtenues par l'étape de structuration de surface croisent des gravures obtenues par l'étape de gravage. L'aspect visuel obtenu par cette superposition est particulier en ce qu'il résulte d'une combinaison d'effets distincts aboutissant à un troisième effet de type combinant les deux décors pris indépendamment, en raison du fait que les stries obtenues par structuration de surface ne modifient de manière visible que la surface initiale de la pièce laissée intacte suite à la réalisation de la gravure, sans affecter le fond des rayures gravées.

L'invention porte aussi sur l'élément horloger obtenu par ce procédé de décoration. Un tel élément comprend ainsi des décors en relief d'au moins deux types, comprenant d'une part des gravures profondes, et d'autre part une structuration de surface formant une rugosité et/ou comprenant des stries peu profondes.

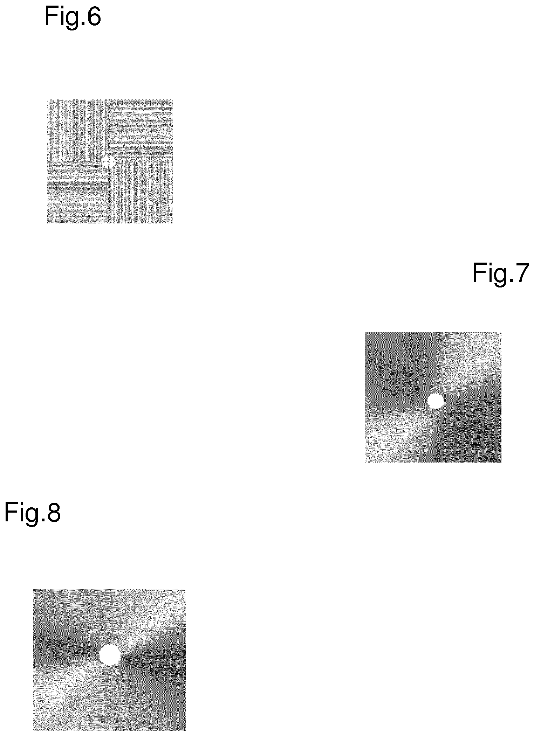

Les figures 6 et 7 illustrent un mode de réalisation particulier consistant à réaliser en premier des lignes régulières gravées par un laser femtoseconde et réparties dans chaque quadrant d'un élément avec une orientation perpendiculaire des lignes pour deux quadrants voisins (figure 6) avec un soleillage superposé au gravage initial (figure 7).

La figure 8 représente schématiquement en vue de dessus un élément horloger obtenu après mise en oeuvre de la seule seconde étape de structuration de surface (sans la première étape de gravage profond). Ainsi, la figure 7 représente l'élément horloger obtenu après la mise en oeuvre du procédé de décoration selon le mode de réalisation, et les figures 6 et 8 représentent le même élément horloger obtenu après la mise en oeuvre unique respectivement de la première et de la seconde étape du procédé de décoration de l'élément horloger selon le mode de réalisation de l'invention. La figure 7 montre qu'il résulte du mode de réalisation de l'invention une décoration nouvelle, qui va visuellement au-delà de la simple addition des décorations des figures 6 et 8. Cet effet surprenant est encore plus remarquable sur un élément horloger réel.

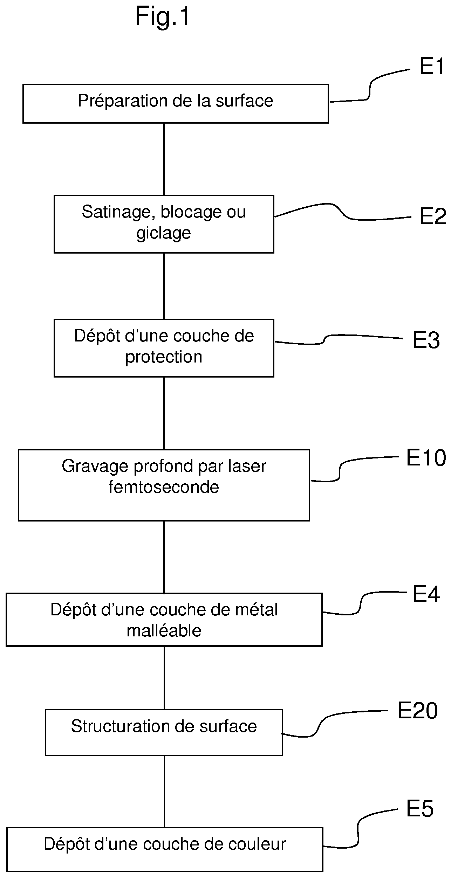

Le procédé de décoration peut comprendre des étapes complémentaires optionnelles. Ce procédé complet, incluant les étapes optionnelles, est illustré par la figure 1.

Selon le mode de réalisation, le procédé de décoration comprend au préalable une étape de préparation E1 de la surface du cadran à traiter. Pour cela, la plaque qui forme le cadran, qui se trouve par exemple en matériau métallique comme du laiton, est polie, lavée et dégraissée. En variante, le cadran, ou tout autre élément horloger à décorer, peut se trouver dans un autre matériau métallique, le terme métallique incluant un métal pur ou tout alliage métallique, comme en acier, en titane, en or ou en platine. Alternativement, on pourrait aussi imaginer une plaque de base en céramique, par exemple en zircone ou en alumine, en silicium, en verre, en saphir, en nacre ou en matériau minéral, dont le fond montre la couleur naturelle du matériau ou est coloré en une couleur donnée, par exemple en blanc.

De manière optionnelle, le procédé de décoration comprend une étape de traitement E2 complémentaire de satinage, brossage, ou giclage. Cette étape E2 peut être réalisée à tout moment du procédé de décoration avant l'étape de structuration de surface E20.

De même, de manière optionnelle, le procédé de décoration comprend une étape de dépôt E3 d'une couche optionnelle, de préférence d'épaisseur comprise entre 0,2 et 1 µm inclus, pour protéger le cadran contre l'oxydation et/ou le colorer.

Après l'étape de gravage profond E10, un lavage est effectué, et le procédé de décoration peut comprendre selon le mode de réalisation une étape de dépôt E4 d'une couche de métal. De façon préférée, ce métal déposé comprend de l'argent, qui est suffisamment malléable pour être structuré lors des opérations qui suivent, notamment l'étape de structuration de surface E20. On peut bien entendu déposer une couche d'un métal malléable autre que l'argent pour faciliter la réalisation du deuxième usinage.

Une couche ou une série de couches de mise en couleur peut être ensuite optionnellement déposée dans une étape finale E5 de fin du procédé de décoration, par exemple par l'intermédiaire d'une ou plusieurs couche(s) galvanique(s), et/ou une ou des couche(s) formée(s) par dépôt PVD (dépôt physique en vase vapeur, selon l'acronyme anglais « Physical Vapor Déposition »), et/ou et/ou une ou des couche(s) formée(s) par dépôt ALD (dépôt de couche atomique, selon l'acronyme anglais « Atomic Layer Déposition »), ou par toute autre technique de dépôt permettant de former un revêtement susceptible de venir modifier la couleur perçue du cadran. Il est envisageable de déposer la couche colorée sur une partie du cadran seulement par des techniques de masquage, ou de déposer plusieurs couches de couleur différentes à des endroits différents de la surface du cadran.

La profondeur de gravure, ainsi que la distance latérale entre deux gravures, sera choisie en fonction des critères esthétiques souhaités (par exemple, effet d'optique, dépôt ou non d'une décalque, etc.). Il faut aussi tenir compte des éventuelles couches déposées après la gravure laser, notamment pour la couche de décoration (soleillage) et les éventuelles couches de mise en couleur. Pour ces dernières, l'influence de couches galvaniques sur l'esthétique du décor laser est plus importante que pour des couches PVD. En effet, l'épaisseur des couches, ainsi que le procédé en lui-même, entraînent un nivellement du décor de l'ordre de 1 µm.

Le procédé de décoration a été illustré précédemment à titre d'exemple, et il est envisageable d'inverser l'ordre de certaines étapes, comme de réaliser la structuration de surface, notamment le soleillage, après une étape de dépôt d'une couche de couleur, par exemple, ou avant le gravage laser, par exemple.

En général, un vernis est ensuite déposé, puis une décalque est appliquée avec des marquages (lettres, chiffres, index, chemin de fer, autres signes) sur le cadran. Optionnellement, le cadran terminé peut aussi comporter des appliques, comme des index avec de la matière luminescente ou des chatons sertis de pierres précieuses.

## Revendications

1. Procédé de décoration d'un élément horloger, **caractérisé en ce qu'**il comprend les étapes suivantes :
- Gravage profond (E10) d'une surface à décorer de l'élément horloger par un laser femtoseconde ; et
- Structuration de surface (E20) de ladite surface à décorer de l'élément horloger,
ces deux décorations étant au moins partiellement superposées l'une à l'autre.

2. Procédé de décoration d'un élément horloger selon la revendication précédente, **caractérisé en ce que** l'étape de gravage profond (E10) réalise des gravures de profondeur supérieure ou égale à 4 µm, voire supérieure ou égale à 8 µm, ou comprise entre 4 et 25 µm.

3. Procédé de décoration d'un élément horloger selon l'une des revendications précédentes, **caractérisé en ce que** l'étape de structuration de surface (E20) comprend un soleillage, ou un satinage, ou un giclage, ou un sablage, ou une frappe fine, ou un azurage, ou un perlage, ou un colimaçonnage, ou la réalisation de Côtes de Genève.

4. Procédé de décoration d'un élément horloger selon l'une des revendications précédentes, **caractérisé en ce que** l'étape de structuration de surface (E20) réalise des reliefs de profondeur moyenne inférieure ou égale à 0,1 µm, voire 0,3 µm, voire 1 µm.

5. Procédé de décoration d'un élément horloger selon l'une des revendications précédentes, **caractérisé en ce qu'**il comprend une étape intermédiaire (E4) de dépôt d'une couche de métal, notamment un métal malléable, comme l'argent.

6. Procédé de décoration d'un élément horloger selon l'une des revendications précédentes, **caractérisé en ce qu'**il comprend une étape, notamment une étape finale (E5), de coloration par dépôt d'une ou plusieurs couche(s) galvanique(s), et/ou d'une ou de(s) couche(s) PVD, et/ou d'une ou de(s) couche(s) ALD, et/ou de dépôt par toute autre technique permettant de former un revêtement susceptible de venir modifier la couleur perçue de l'élément horloger.

7. Procédé de décoration d'un élément horloger selon l'une des revendications précédentes, **caractérisé en ce que** l'étape de gravage profond (E10) réalise :
- des lignes, parallèles ou sensiblement parallèles, et/ou
- des lignes, parallèles ou sensiblement parallèles sur différentes zones de la surface à décorer, ces lignes n'étant pas parallèles entre deux zones différentes, notamment les lignes de deux zones voisines étant perpendiculaires.

8. Procédé de décoration d'un élément horloger selon l'une des revendications précédentes, **caractérisé en ce que** l'étape de structuration de surface (E20) forme des stries qui croisent des gravures formées par l'étape de gravage profond (E10).

9. Element horloger obtenu par un procédé de décoration selon l'une des revendications précédentes, **caractérisé en ce qu'**il comprend au moins une gravure profonde obtenue par un laser femtoseconde et une structuration de surface au moins partiellement superposée.

10. Element horloger selon la revendication précédente, **caractérisé en ce que** la gravure profonde comprend une profondeur moyenne supérieure ou égale à 4 µm, voire supérieure ou égale à 8 µm, ou comprise entre 4 et 25 µm, et **en ce que** la structuration de surface comprend des creusures de profondeur inférieure ou égale à 0,1 µm, voire 0,3 µm, voire 1 µm.

11. Element horloger selon l'une des revendications 9 ou 10, **caractérisé en ce qu'**il est un cadran ou une lunette ou une ébauche de mouvement, ou une fourniture du mouvement, en particulier un couvercle ou un tambour de barillet, ou un rochet.

12. Element horloger selon l'une des revendications 9 à 11, **caractérisé en ce qu'**il est en métal, ou en en céramique comme en zircone ou en alumine, ou en silicium, ou en verre, ou en saphir, ou en nacre, ou en matériau minéral.

13. Pièce d'horlogerie comme une montre, notamment une montre-bracelet, **caractérisée en ce qu'**elle comprend un élement horloger selon l'une des revendications 9 à 12.

## Patentansprüche

1. Dekorationsverfahren eines Uhrelements, **dadurch gekennzeichnet, dass** es die folgenden Schritte umfasst:
• Tiefengravur (E10) einer zu dekorierenden Oberfläche des Uhrenelements durch einen Femtosekunden-Laser; und
• Oberflächenstrukturierung (E20) der genannten zu dekorierenden Oberfläche des Uhrenelements,
wobei diese zwei Dekorationen sich gegenseitig zumindest teilweise überlappen.

2. Dekorationsverfahren eines Uhrelements gemäß dem vorangehenden Anspruch, **dadurch gekennzeichnet, dass** der Schritt der Tiefengravur (E10) Gravuren von einer Tiefe größer oder gleich 4 µm, sogar größer oder gleich 8 µm oder zwischen 4 und 25 µm erzielt.

3. Dekorationsverfahren eines Uhrelements gemäß einem der vorangehenden Ansprüche, **dadurch gekennzeichnet, dass** der Schritt der Oberflächenstrukturierung (E20) einen Sonnenschliff, oder eine Satinierung, oder ein Spritzverfahren, oder eine Sandstrahlung, oder eine Feinprägung, oder eine Aufhellung, oder eine Perlierung, oder einen Wendelschliff, oder die Darstellung von Genfer Streifen umfasst.

4. Dekorationsverfahren eines Uhrelements gemäß einem der vorangehenden Ansprüche, **dadurch gekennzeichnet, dass** der Schritt der Oberflächenstrukturierung (E20) Reliefs mit einer mittleren Tiefe von kleiner oder gleich 0,1 µm, sogar 0,3 µm, sogar 1 µm erzielt.

5. Dekorationsverfahren eines Uhrelements gemäß einem der vorangehenden Ansprüche, **dadurch gekennzeichnet, dass** es einen zusätzlichen Schritt (E4) zur Aufbringung einer Metallschicht umfasst, insbesondere eines formbaren Metalls, wie Silber.

6. Dekorationsverfahren eines Uhrelements gemäß einem der vorangehenden Ansprüche, **dadurch gekennzeichnet, dass** es einen Schritt umfasst, insbesondere einen letzten Schritt (E5), zur Farbgebung durch Abscheidung einer oder mehrerer galvanischer Schicht(en) und/oder einer oder mehrerer PVD-Schichten und/oder einer oder mehrerer ALD-Schichten und/oder durch Abscheiden durch jede andere Technik, die es erlaubt, eine Beschichtung zu bilden, die die Farbe, die von dem Uhrenelement wahrgenommen wird, verändern kann.

7. Dekorationsverfahren eines Uhrelements gemäß einem der vorangehenden Ansprüche, **dadurch gekennzeichnet, dass** der Schritt der Tiefengravur (E10) erzielt:
• parallele oder im Wesentlichen parallele Linien, und/oder
• parallele oder im Wesentlichen parallele Linien in verschiedenen Bereichen der zu dekorierenden Oberfläche, wobei diese Linien zwischen zwei verschiedenen Bereichen nicht parallel sind, wobei insbesondere die Linien von zwei aneinandergrenzenden Bereichen senkrecht zueinander angeordnet sind.

8. Dekorationsverfahren eines Uhrelements gemäß einem der vorangehenden Ansprüche, **dadurch gekennzeichnet, dass** der Schritt zur Oberflächenstrukturierung (E20) Rippen bildet, die die durch die Tiefengravur (E10) gebildeten Gravuren kreuzen.

9. Uhrelement erhalten durch ein Dekorationsverfahren gemäß einem der vorangehenden Ansprüche, **dadurch gekennzeichnet, dass** es zumindest eine durch einen Femtosekunden-Laser entstandene Tiefengravur und eine zumindest teilweise überlagerte Oberflächenstrukturierung umfasst.

10. Uhrelement gemäß dem vorangehenden Anspruch, **dadurch gekennzeichnet, dass** die Tiefengravur eine mittlere Tiefe von größer oder gleich 4 µm, sogar größer oder gleich 8 µm oder zwischen 4 und 25 µm aufweist und die Oberflächenstrukturierung Einsenkungen mit einer Tiefe von kleiner oder gleich 0,1 µm, sogar 0,3 µm, sogar 1 µm aufweist.

11. Uhrelement gemäß einem der Ansprüche 9 oder 10, **dadurch gekennzeichnet, dass** es ein Zifferblatt oder eine Lünette oder ein Rohwerk oder ein Bestandteil des Uhrwerks, insbesondere ein Deckel oder eine Federhaustrommel oder ein Sperrrad ist.

12. Uhrelement gemäß den Ansprüchen 9 bis 11, **dadurch gekennzeichnet, dass** es aus Metall oder aus Keramik, wie auch aus Zirkonoxid oder aus Aluminiumoxid oder aus Silizium oder aus Glas oder aus Saphir oder aus Perlmutt oder aus einem mineralischen Material besteht.

13. Zeitmessgerät, wie eine Uhr, insbesondere eine Armbanduhr, **dadurch gekennzeichnet, dass** es ein Uhrelement gemäß den Ansprüchen 9 bis 12 umfasst.

## Claims

1. A process for decorating a timepiece component, **characterized in that** it comprises the following steps:
- deep engraving (E10) of a surface to be decorated of the timepiece component with a femtosecond laser; and
- surface structuring (E20) of said surface to be decorated of the timepiece component,
these two decorations being at least partially superposed on each other.

2. The process for decorating a timepiece component as claimed in the preceding claim, **characterized in that** the deep-engraving step (E10) produces engravings of depth larger than or equal to 4 µm, or even larger than or equal to 8 µm, or comprised between 4 and 25 µm.

3. The process for decorating a timepiece component as claimed in one of the preceding claims, **characterized in that** the surface-structuring step (E20) comprises sunray brushing, or satin finishing, or soft sand blasting, or sand blasting, or fine stamping, or circular graining, or spotting, or snailing, or producing Côtes de Genève.

4. The process for decorating a timepiece component as claimed in one of the preceding claims, **characterized in that** the surface-structuring step (E20) produces reliefs of average depth smaller than or equal to 0.1 µm, or even 0.3 µm, or even 1 µm.

5. The process for decorating a timepiece component as claimed in one of the preceding claims, **characterized in that** it comprises an intermediate step (E4) of depositing a metal layer, especially a layer of a malleable metal such as silver.

6. The process for decorating a timepiece component as claimed in one of the preceding claims, **characterized in that** it comprises a step, especially a final step (E5), of coloring by deposition of one or more electroplated layers, and/or one or more PVD layers, and/or one or more ALD layers, and/or deposition by any other technique allowing a coating liable to modify the perceived color of the timepiece component to be formed.

7. The process for decorating a timepiece component as claimed in one of the preceding claims, **characterized in that** the deep-engraving step (E10) produces:
- lines that are parallel or substantially parallel; and/or
- lines that are parallel or substantially parallel in various zones of the surface to be decorated, these lines not being parallel between two different zones, the lines of two neighboring zones in particular being perpendicular.

8. The process for decorating a timepiece component as claimed in one of the preceding claims, **characterized in that** the surface-structuring step (E20) forms striations that cross engravings formed by the deep-engraving step (E10) .

9. A timepiece component obtained by a decorating process as claimed in one of the preceding claims, **characterized in that** it comprises at least one deep engraving obtained with a femtosecond laser and an at least partially superposed surface structure.

10. The timepiece component as claimed in the preceding claim, **characterized in that** the deep engraving has an average depth larger than or equal to 4 µm, or even larger than or equal to 8 µm, or comprised between 4 and 25 µm, and **in that** the surface structure comprises recesses of depth smaller than or equal to 0.1 µm, or even 0.3 µm, or even 1 µm.

11. The timepiece component as claimed in either of claims 9 and 10, **characterized in that** it is a dial or a bezel or a blank-movement, or a movement part, in particular a barrel drum or cover, or a ratchet.

12. The timepiece component as claimed in one of claims 9 to 11, **characterized in that** it is made of metal, or of a ceramic such as zirconia or alumina, or of silicon, or of glass, or of sapphire, or of mother-of-pearl or of a mineral material.

13. A timepiece such as a watch, especially a wristwatch, **characterized in that** it comprises a timepiece component as claimed in one of claims 9 to 12.
